(19) Europäisches Patentamt
European Patent Office
Office européen des brevets

(11) **EP 4 757 357 A1**

(12) **EUROPEAN PATENT APPLICATION**
published in accordance with Art. 153(4) EPC

(43) Date of publication:
**10.06.2026 Bulletin 2026/24**

(21) Application number: **24850621.4**

(22) Date of filing: **16.05.2024**

(51) International Patent Classification (IPC):
**H04W 4/38** (2018.01)   **H04W 24/08** (2009.01)
**H04L 5/00** (2006.01)

(52) Cooperative Patent Classification (CPC):
**H04L 5/00; H04W 4/38; H04W 24/08**

(86) International application number:
**PCT/CN2024/093561**

(87) International publication number:
**WO 2025/030968 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023  CN 202311012154**

(71) Applicant: **ZTE Corporation**
**Shenzhen, Guangdong  518057 (CN)**

(72) Inventors:
• **WANG, Yuxin**
  **Shenzhen, Guangdong 518057 (CN)**
• **XIA, Shuqiang**
  **Shenzhen, Guangdong 518057 (CN)**
• **MA, Yihua**
  **Shenzhen, Guangdong 518057 (CN)**
• **WANG, Zhongbin**
  **Shenzhen, Guangdong 518057 (CN)**
• **BAI, Chen**
  **Shenzhen, Guangdong 518057 (CN)**

(74) Representative: **Aipex B.V.**
**Vestdijk 51**
**5611 CA Eindhoven (NL)**

(54) **SENSING SIGNAL TRANSMISSION METHODS, APPARATUS, SENSING NODE, AND STORAGE MEDIUM**

(57)   Provided are a sensing signal transmission method and apparatus, a sensing node, and a storage medium. The method includes: sending a sensing signal and acquiring feedback information for the sensing signal; and determining an environmental parameter of a to-be-measured region according to the feedback information; where the to-be-measured region is a region between a sensing signal transmitting node and a sensing signal receiving node. In this method, the sensing signal is sent, thereby sensing the surrounding environmental information.

Send a sensing signal and acquire feedback information for the sensing signal — S101

Determine an environmental parameter of a to-be-measured region according to the feedback information — S102

**FIG. 1**

## Description

TECHNICAL FIELD

The present application relates to the field of sensing technologies and, in particular, to a sensing signal transmission method and apparatus, a sensing node, and a storage medium.

BACKGROUND

The cellular mobile system has a powerful networking capability. Through large-scale deployment of cellular networks, the interaction between base stations and terminals, the interaction between base stations, and the interaction between base stations and the core network, constructing an integrated communication and sensing mobile network system has become the main technical approach. Network collaborative sensing based on the cellular system can make full use of the base station resources of the cellular system so that not only can the cost of integrated communication and sensing be reduced, but also the networking capability of sensing can be achieved. By appropriately selecting sensing base stations in the cellular system and sharing, supplementing, or merging sensing data, the signal interference caused by too many nodes can be reduced while the advantages of the cellular network are maintained. Moreover, network sensing can further improve sensing performance by avoiding blockage through cooperation between base stations without upgrading hardware.

In a narrow sense, a sensing network refers to a system capable of target positioning (distance measurement, speed measurement, and angle measurement), target imaging, target detection, target tracking, and target recognition. In a broad sense, a sensing network refers to a system capable of sensing the attributes and states of all services, networks, users, terminals, and environmental objects. In an integrated communication and sensing mobile network, sensing methods may be divided into an active sensing method and a passive sensing method. Passive sensing refers to a process in which the sensing entity (the network side or the terminal) performs sensing by acquiring electromagnetic waves emitted by the target object or electromagnetic waves reflected from sources other than the sensing entity and the target object. Active sensing refers to a process in which the sensing entity (the network side or the terminal) performs sensing by sending electromagnetic waves and receiving echoes reflected from the target object. Therefore, in a communication and sensing system, how to transmit sensing signals to acquire corresponding sensing information is a technical problem that urgently needs to be solved by those skilled in the art.

SUMMARY

Embodiments of the present application provide a sensing signal transmission method and apparatus, a sensing node, and a storage medium.

In a first aspect, an embodiment of the present application provides a sensing signal transmission method. The sensing signal transmission method includes the following.

A sensing signal is sent and feedback information for the sensing signal is acquired.

An environmental parameter of a to-be-measured region is determined according to the feedback information.

The to-be-measured region is a region between a sensing signal transmitting node and a sensing signal receiving node.

In a second aspect, an embodiment of the present application provides a sensing signal transmission method. The sensing signal transmission method includes the following.

A first sensing signal is sent.

First frequency information and first delay information of the first sensing signal measured by a target node are received.

A second sensing signal is received from the target node and second frequency information and second delay information of the second sensing signal are measured.

A local oscillator frequency offset between a transmitting node of the first sensing signal and the target node is determined according to the first frequency information and the second frequency information and a timing offset between the transmitting node of the first sensing signal and the target node is determined according to the first delay information and the second delay information.

In a third aspect, an embodiment of the present application provides a sensing signal transmission apparatus. The sensing signal transmission apparatus includes a sending module, an acquisition module, and a determination module.

The sending module is configured to send a sensing signal.

The acquisition module is configured to acquire feedback information for the sensing signal.

The determination module is configured to determine an environmental parameter of a to-be-measured region according to the feedback information.

The to-be-measured region is a region between a sensing signal transmitting node and a sensing signal receiving node.

In a fourth aspect, an embodiment of the present application provides a sensing signal transmission apparatus. The sensing signal transmission apparatus includes a sending module, a receiving module, and a determination module.

The sending module is configured to send a first sensing signal.

The receiving module is configured to receive first frequency information and first delay information of the first sensing signal measured by a target node.

The receiving module is further configured to receive a second sensing signal from the target node.

The determination module is configured to measure second frequency information and second delay information of the second sensing signal, determine a local oscillator frequency offset between a transmitting node of the first sensing signal and the target node according to the first frequency information and the second frequency information, and determine a timing offset between the transmitting node of the first sensing signal and the target node according to the first delay information and the second delay information.

In a fifth aspect, an embodiment of the present application provides a sensing node including a memory and a processor, where the memory is configured to store a computer program which, when executed by the processor, causes the processor to perform the sensing signal transmission method provided in the first aspect and the second aspect of the embodiment of the present application.

In a sixth aspect, an embodiment of the present application provides a storage medium. The storage medium is configured to store a computer program which, when executed by a processor, causes the processor to perform the sensing signal transmission method provided in the first aspect and the second aspect of the embodiment of the present application.

In the technical solutions provided in the embodiments of the present application, the sensing signal is transmitted, the feedback information for the sensing signal is acquired, and the environmental parameter of the to-be-measured region is determined according to the feedback information. For example, the amount of rainfall in the to-be-measured region can be measured, thereby sensing the surrounding environmental information.

In addition, in the technical solutions provided in the embodiments of the present application, the sensing signal transmitting node and the sensing signal receiving node exchange the sensing signal, the local oscillator frequency offset between the transmitting node and the receiving node is determined based on the first frequency information and the second frequency information obtained from the round-trip measurement of the sensing signal, and the timing offset between the transmitting node and the receiving node is determined based on the first delay information and the second delay information obtained from the round-trip measurement of the sensing signal, thereby improving the sensing accuracy.

BRIEF DESCRIPTION OF DRAWINGS

FIG. 1 is a flowchart of a sensing signal transmission method according to an embodiment of the present application.

FIG. 2 is another flowchart of a sensing signal transmission method according to an embodiment of the present application.

FIG. 3 is another flowchart of a sensing signal transmission method according to an embodiment of the present application.

FIG. 4 is another flowchart of a sensing signal transmission method according to an embodiment of the present application.

FIG. 5 is another flowchart of a sensing signal transmission method according to an embodiment of the present application.

FIG. 6 is another flowchart of a sensing signal transmission method according to an embodiment of the present application.

FIG. 7 is a schematic view illustrating a principle of a sensing signal transmission method according to an embodiment of the present application.

FIG. 8 is a diagram illustrating the structure of a sensing signal transmission apparatus according to an embodiment of the present application.

FIG. 9 is another diagram illustrating the structure of a sensing signal transmission apparatus according to an embodiment of the present application.

FIG. 10 is a diagram illustrating the structure of a sensing node according to an embodiment of the present application.

DETAILED DESCRIPTION

It is to be understood that the embodiments described herein are intended to explain the present application, not to limit the present application. The embodiments of the present application are described hereinafter in detail in conjunction with the drawings.

In an integrated communication and sensing system, sensing signal transmitting nodes may actively send sensing signals, the sensing signals are reflected by the sensing target and received by one or more sensing signal receiving nodes, and after further information processing and the information exchange between nodes, the corresponding sensing information from the surrounding environment is acquired. The sensing signal transmitting ends and the sensing signal receiving nodes may be base stations, user terminals, drones, aircraft, radar transmitting devices, and the like. The specific technologies and equipment forms adopted by the sensing nodes in the integrated communication and sensing system are not limited in the embodiments of the present application. Of course, each node in the preceding integrated communication and sensing system has a transceiving function, that is, each node may serve as both a sensing signal transmitting node and a sensing signal receiving node, which is not limited in the embodiments of the present application.

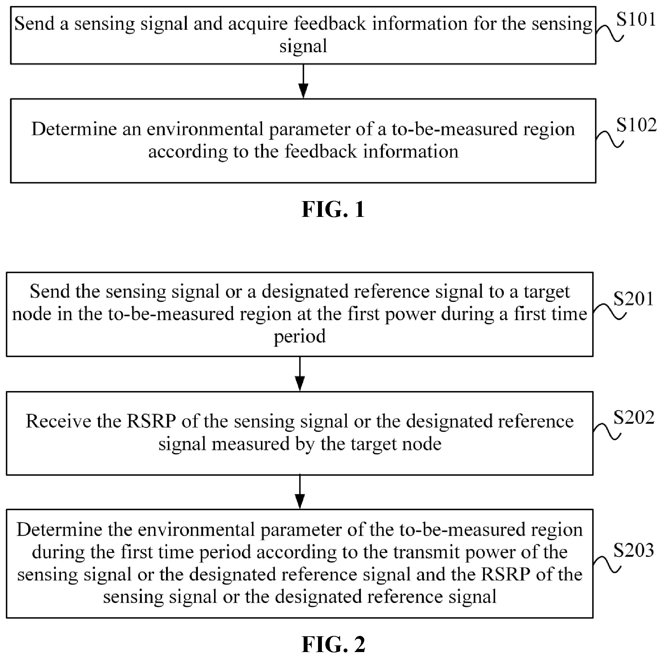

FIG. 1 is a flowchart of a sensing signal transmission method according to an embodiment of the present application. As shown in FIG. 1, the method may include the following.

In S101, a sensing signal is sent and feedback information for the sensing signal is acquired.

In S102, an environmental parameter of a to-be-measured region is determined according to the feedback information.

Specifically, the sensing node may actively send the sensing signal or instruct the target node in the to-be-measured region to send the sensing signal, the sensing node may actively acquire the feedback information for the sensing signal or receive the feedback information for the sensing signal from the target node in the to-be-measured region, and then the environmental parameter of the to-be-measured region is determined based on the feedback information. The feedback information may be the echo signal resulting from the sensing signal being reflected by the sensing target, or the feedback information may be the reference signal receiving power (RSRP) of the sensing signal. The to-be-measured region is a region between a sensing signal transmitting node and a sensing signal receiving node.

For example, the sensing node may send the sensing signal and measure the amount of rainfall and snowfall in the region where the sensing node is located by using the feedback information for the sensing signal.

In an embodiment, the environmental parameter of the to-be-measured region during a first time period may be determined in the manners below. It is to be noted that S201 and S202 below are an optional embodiment of S101 above, and S203 below is an optional embodiment of S102 above. As shown in FIG. 2, the method may include the following.

In S201, the sensing signal or a designated reference signal is sent to a target node in the to-be-measured region at the first power during a first time period.

Specifically, the sensing node may determine the target node located in the to-be-measured region from the surrounding sensing nodes according to the position information of the surrounding sensing nodes and send the sensing signal or the designated reference signal to the target node one or multiple times at the first power during the first time period.

In S202, the RSRP of the sensing signal or the designated reference signal measured by the target node is received.

After receiving the sensing signal or the designated reference signal, the target node measures the RSRP of the sensing signal or the designated reference signal and reports the measured RSRP of the sensing signal or the designated reference signal to the sensing node. The sensing node receives the RSRP of the sensing signal or the designated reference signal reported by the target node.

In S203, the environmental parameter of the to-be-measured region during the first time period is determined according to the transmit power of the sensing signal or the designated reference signal and the RSRP of the sensing signal or the designated reference signal.

Specifically, the sensing node determines the environmental parameter of the to-be-measured region during the first time period through the difference between the transmit power of the sensing signal or the designated reference signal and the RSRP of the sensing signal or the designated reference signal. In other words, the sensing node determines the environmental parameter of the to-be-measured region during the first time period by measuring the downlink path loss.

The case where the base station serves as the preceding sensing node and the amount of rainfall in the to-be-measured region is measured is used as an example. During the rainy period (that is, the preceding first time period), the base station sends the dedicated reference signal (such as the Rain-RS) or the sensing signal to the target user equipment (UE) in the to-be-measured region one or multiple times. The target UE measures the Rain-RS or the sensing signal, obtains the RSRP of the Rain-RS or the sensing signal, and reports the RSRP of the Rain-RS or the sensing signal to the base station. The base station determines the amount of rainfall in the to-be-measured region through the difference between the transmit power and the RSRP of the Rain-RS or the sensing signal.

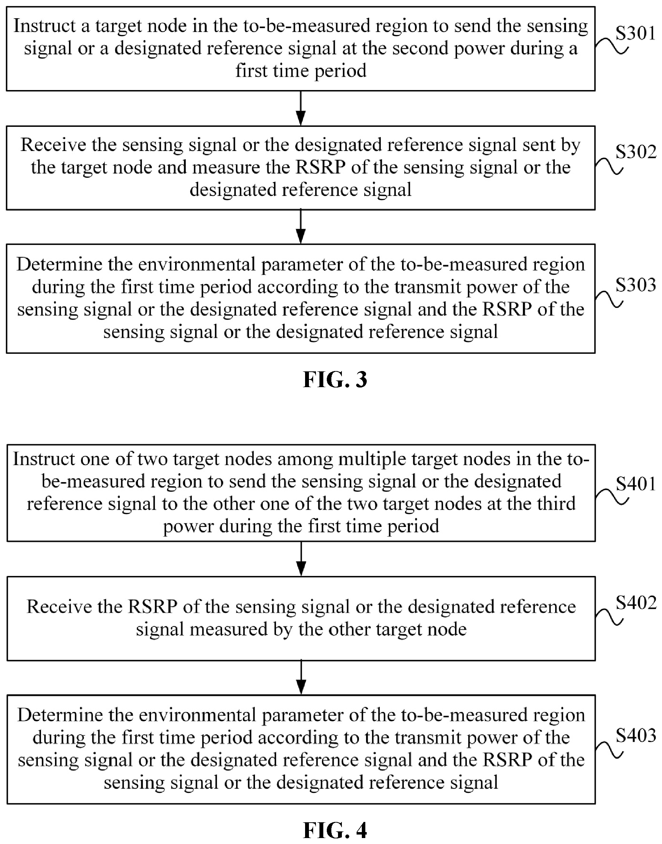

In an embodiment, the environmental parameter of the to-be-measured region during the first time period may also be determined in the manners below. It is to be noted that S301 and S302 below are an optional embodiment of S101 above, and S303 below is an optional embodiment of S102 above. As shown in FIG. 3, the method may include the following.

In S301, a target node in the to-be-measured region is instructed to send the sensing signal or a designated reference signal at the second power during a first time period.

Specifically, the sensing node may determine the target node located in the to-be-measured region from the surrounding sensing nodes according to the position information of the surrounding sensing nodes and instruct the target node to send the sensing signal or the designated reference signal at the second power during the first time period according to signaling.

In S302, the sensing signal or the designated reference signal is received from the target node and the RSRP of the sensing signal or the designated reference signal is measured.

The target node is instructed to send the sensing signal or the designated reference signal to the sensing node at the second power according to the signaling, and the sensing node receives the sensing signal or the designated reference signal and measures the RSRP of the sensing signal or the designated reference signal.

In S303, the environmental parameter of the to-be-measured region during the first time period is determined according to the transmit power of the sensing signal or the designated reference signal and the RSRP of the sensing signal or the designated reference signal.

Specifically, the sensing node determines the environmental parameter of the to-be-measured region during the first time period through the difference between the transmit power of the sensing signal or the designated reference signal and the RSRP of the sensing signal or the designated reference signal. In other words, the sensing node determines the environmental parameter of the to-be-measured region during the first time period by measuring the uplink path loss.

The case where the base station serves as the preceding sensing node and the amount of rainfall in the to-be-measured region is measured is used as an example. During the rainy period, according to signaling, the base station instructs the target UE in the to-be-measured region to send the sounding reference signal or the sensing signal multiple times at different transmit power. The base station receives the sounding reference signal or the sensing signal and measures the RSRP of the sounding reference signal or the sensing signal. The base station determines the amount of rainfall in the to-be-measured region through the difference between the transmit power and the RSRP of the sounding reference signal or the sensing signal.

In an embodiment, the environmental parameter of the to-be-measured region during the first time period may also be determined in the manners below. It is to be noted that S401 and S402 below are an optional embodiment of S101 above, and S403 below is an optional embodiment of S102 above. As shown in FIG. 4, the method may include the following.

In S401, one of two target nodes among multiple target nodes in the to-be-measured region is instructed to send the sensing signal or the designated reference signal to the other one of the two target nodes at the third power during the first time period.

Specifically, the sensing node may determine the multiple target nodes located in the to-be-measured region from the surrounding sensing nodes according to the position information of the surrounding sensing nodes. A line of sight (LoS) path exists between any two of the multiple target nodes. According to signaling, the sensing node instructs, by signaling, one of two target nodes among the multiple target nodes to send the designated reference signal or the sensing signal to the other target node of the two target nodes at the third power or instructs one target node of the two target nodes to send the designated reference signal or the sensing signal to the other target node of the two target nodes multiple times at different power.

In S402, the RSRP of the sensing signal or the designated reference signal measured by the other target node is received.

The target node receives the sensing signal or the designated reference signal, measures the RSRP of the sensing signal or the designated reference signal, and reports the RSRP of the sensing signal or the designated reference signal to the sensing node. The sensing node receives the RSRP of the sensing signal or the designated reference signal reported by the target node.

In S403, the environmental parameter of the to-be-measured region during the first time period is determined according to the transmit power of the sensing signal or the designated reference signal and the RSRP of the sensing signal or the designated reference signal.

Specifically, the sensing node determines the environmental parameter of the to-be-measured region during the first time period through the difference between the transmit power of the sensing signal or the designated reference signal and the RSRP of the sensing signal or the designated reference signal. In other words, the sensing node determines the environmental parameter of the to-be-measured region during the first time period by measuring the Device-to-Device (D2D) path loss.

The case where the base station serves as the preceding sensing node and the amount of rainfall in the to-be-measured region is measured is used as an example. During the rainy period, according to signaling, the base station instructs, by signaling, one target node of two target nodes among multiple target UEs or target UE groups in the to-be-measured region to send the designated reference signal or the sensing signal to the other target node of the two target nodes at a certain power or to send the designated reference signal or the sensing signal to the other target node of the two target nodes multiple times at different power. One target UE in the multiple target UEs or target UE groups receives the designated reference signal or the sensing signal from another target UE, measures the RSRP of the designated reference signal or the sensing signal, and reports the measured RSRP to the base station. The base station determines the amount of rainfall in the to-be-measured region according to the RSRP reported by the target UE and the transmit power between the target UEs.

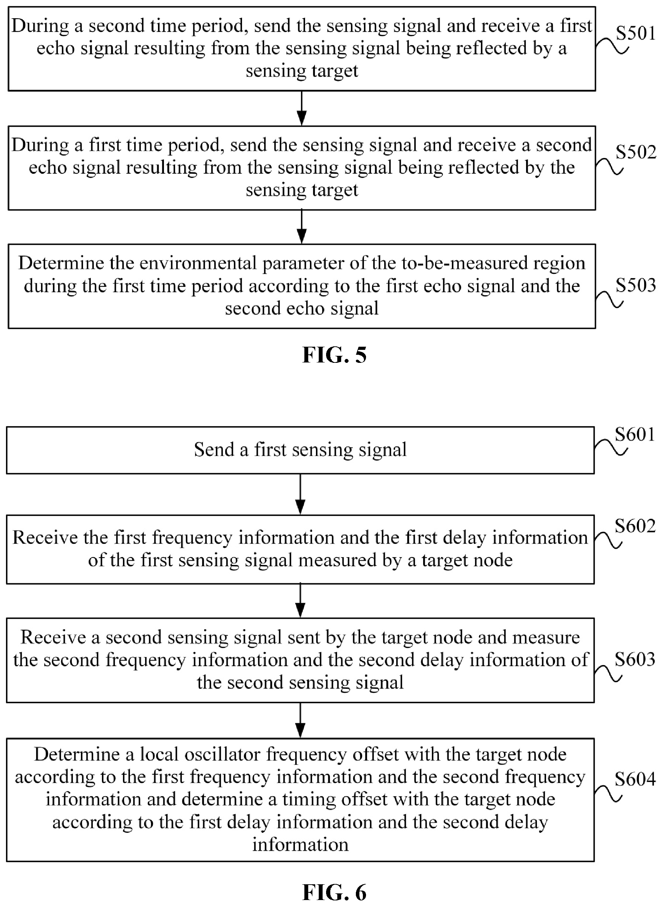

In an embodiment, the environmental parameter of the to-be-measured region during the first time period may also be determined in the manners below. It is to be noted that S501 and S502 below are an optional embodiment of S101 above, and S503 below is an optional embodiment of S102 above. As shown in FIG. 5, the method may include the following.

In S501, during a second time period, the sensing signal is sent and a first echo signal resulting from the sensing signal being reflected by a sensing target is received.

The preceding sensing target is a target in the to-be-measured region, and the LoS path exists between the sensing target and the sensing node. The second time period differs from the first time period. The amount of rainfall in the to-be-measured region is used as an example. The second time period may refer to a period of clear weather without rain, while the first time period may refer to a rainy period.

In S502, during a first time period, the sensing signal is sent and a second echo signal resulting from the sensing signal being reflected by the sensing target is received.

In S503, the environmental parameter of the to-be-measured region during the first time period is determined according to the first echo signal and the second echo signal.

Optionally, after the first echo signal is received, the signal strength of the first echo signal is measured; after the second echo signal is received, the signal strength of the second echo signal is measured.

Correspondingly, the process of S503 above may be the following: determining the environmental parameter of the to-be-measured region during the first time period according to the signal strength of the first echo signal and the signal strength of the second echo signal.

The case where the base station serves as the preceding sensing node and the amount of rainfall in the to-be-measured region is measured is used as an example. Firstly, one or more fixed sensing targets are selected in the to-be-measured region. During the period of clear weather without rain, the base station sends the sensing signal, the fixed sensing target reflects the sensing signal, and the base station receives the first echo signal reflected from the sensing target and measures the signal strength of the first echo signal. The signal strength of the first echo signal is denoted as R1. During the rainy period, the base station continues sending the sensing signal to the preceding sensing target at the same power, the sensing target reflects the sensing signal, and the base station receives the second echo signal reflected from the sensing target and measures the signal strength of the second echo signal. The signal strength of the second echo signal is denoted as R2. Based on R1 and R2, the base station determines the amount of rainfall in the to-be-measured region during the rainy period. For example, the amount of rainfall in the to-be-measured region during the rainy period is positively proportional to the difference between R1 and R2. For example, the amount of rainfall is equal to k*(R1-R2), or the amount of rainfall is equal to k*(c*log$_{10}$(R1)-c*log$_{10}$(R2)). k and c are numbers greater than 0. Optionally, c is equal to 10.

In the sensing signal transmission method provided in the embodiments of the present application, the sensing signal is transmitted, the feedback information for the sensing signal is acquired, and the environmental parameter of the to-be-measured region is determined according to the feedback information. For example, the amount of rainfall in the to-be-measured region can be measured, thereby sensing the surrounding environmental information.

In the integrated communication and sensing system, the timing offset between the sensing signal transmitting node and the sensing signal receiving node may cause the ranging error and affect the sensing accuracy. Moreover, the local oscillator frequency offset between the sensing signal transmitting node and the sensing signal receiving node may affect the measurement of the Doppler shift, cause the velocity measurement error, and affect the sensing accuracy. Therefore, the timing offset and the local oscillator frequency offset between the sensing signal transmitting node and the sensing signal receiving node may be determined through the process described in the embodiments below.

FIG. 6 is another flowchart of a sensing signal transmission method according to an embodiment of the present application. As shown in FIG. 6, the method may include the following.

In S601, a first sensing signal is sent.

In S602, the first frequency information and the first delay information of the first sensing signal measured by a target node are received.

In S603, a second sensing signal sent by the target node is received and the second frequency information and the second delay information of the second sensing signal are measured.

In S604, a local oscillator frequency offset between the sensing node of the first sensing signal and the target node is determined according to the first frequency information and the second frequency information; and a timing offset between the sensing node and the target node is determined according to the first delay information and the second delay information.

The basic idea of the measurement of the timing offset and the local oscillator frequency offset is as follows: the sensing signal transmitting node and the sensing signal receiving node exchange the sensing signal, the signal propagation delay and the Doppler frequency shift obtained from the round-trip measurement are the same, the timing offset and the local oscillator frequency offset have the same absolute values and the opposite signs, and based on this, the timing offset and the local oscillator frequency offset between the transmitting node and the receiving node can be extracted.

Specifically, the sensing node A sends the first sensing signal, and the target node B receives the first sensing signal reflected from the sensing target and measures the first frequency information $f_{AB}$ and the first delay information $\tau_{AB}$ of the first sensing signal. The first frequency information may be represented by the following formula (1), and the first delay information may be represented by the following formula (2):

$$f_{AB} = f_d + f_{offset} \qquad (1)$$

$$\tau_{AB} = \tau + \tau_{offset} \qquad (2)$$

Next, the target node B sends the second sensing signal, and the sensing node A receives the second sensing signal reflected from the sensing target and measures the second frequency information $f_{BA}$ and the second delay information $\tau_{BA}$ of the second sensing signal. The second frequency information may be represented by the following formula (3), and the second delay information may be represented by the following formula (4):

$$f_{BA} = f_d - f_{offset} \qquad (3)$$

$$\tau_{BA} = \tau - \tau_{offset} \qquad (4)$$

Furthermore, the local oscillator frequency offset $f_{offset}$ between the sensing node and the target node may be determined through the first frequency information and the second frequency information, that is, the local oscillator frequency offset $f_{offset}$ between the sensing node and the target node may be obtained by performing corresponding calculations on formulas (1) and (3). Furthermore, the timing offset $\tau_{offset}$ between the sensing node and the target node may be determined through the first delay information and the second delay information, that is, the timing offset $\tau_{offset}$ between the sensing node and the target node may be obtained by performing corresponding calculations on formulas (2) and (4). $f_d$ denotes the actual Doppler frequency shift, and $\tau$ denotes the actual signal propagation delay.

Optionally, the target node may send the second sensing signal at the maximum transmit power, thereby improving the success rate of the sensing node receiving the sensing signal.

In the sensing signal transmission method provided in the embodiments of the present application, the sensing signal transmitting node and the sensing signal receiving node exchange the sensing signal, the local oscillator frequency offset between the transmitting node and the receiving node is determined based on the first frequency information and the second frequency information obtained from the round-trip measurement of the sensing signal, and the timing offset between the transmitting node and the receiving node is determined based on the first delay information and the second delay information obtained from the round-trip measurement of the sensing signal, thereby improving the sensing accuracy.

Optionally, to improve the accuracy of estimating the timing offset and the local oscillator frequency offset, the first sensing signal after power normalization is the same as the second sensing signal after power normalization.

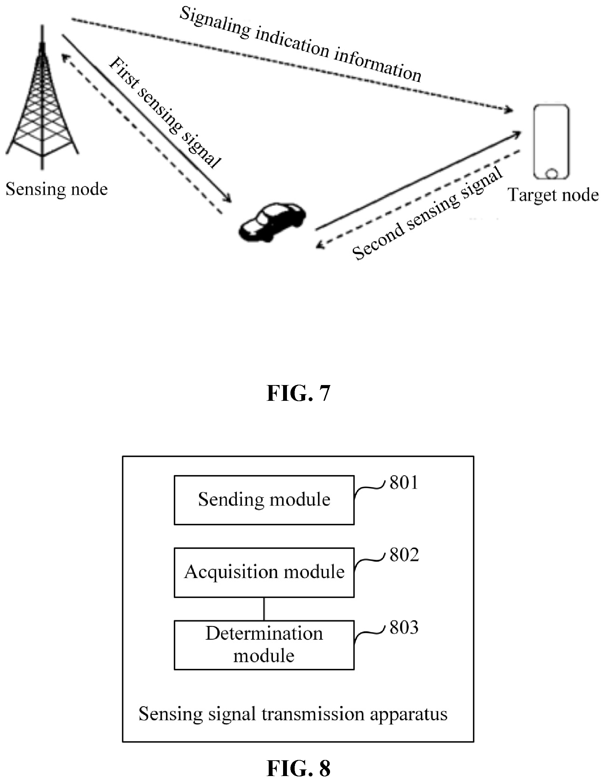

Optionally, as shown in FIG. 7, the sensing node may send signaling indication information to the target node, and the signaling indication information is used for instructing the target node to receive the first sensing signal and send the second sensing signal.

In an embodiment, the sensing node may send the signaling indication information through the Downlink Control Information (DCI) for Physical Downlink Shared Channel (PDSCH) scheduling. Specifically, the process of sending the signaling indication information through the DCI for the PDSCH scheduling may be as follows: the target node is instructed by the signaling of n bits included in the DCI for the PDSCH scheduling to receive the first sensing signal in the downlink slot or symbol indicated by the DCI and to send the second sensing signal in the m-th uplink slot or symbol after the first sensing signal is sent, where n and m are natural numbers greater than 0. For example, m is 1 or a certain natural number predefined by both the sensing node and the target node.

In an embodiment, the sensing node may send the signaling indication information through the DCI for Physical Uplink Shared Channel (PUSCH) scheduling. Specifically, the process of sending the signaling indication information through the DCI for the PUSCH scheduling may be as follows: the target node is instructed by the signaling of n bits included in the DCI for the PUSCH scheduling to receive the first sensing signal in the last downlink slot or symbol after the DCI is received and before the second sensing signal is sent and to send the second sensing signal in the transmission slot or symbol indicated by the DCI, where n is a natural number greater than 0.

In other words, the sensing node may jointly instruct the target node to receive the first sensing signal and send the second sensing signal through the signaling of n bits included in the DCI for PDSCH/PUSCH scheduling so that the sensing node and the target node can exchange the sensing signal, thereby measuring the timing offset and the local oscillator frequency offset between the sensing node and the target node.

Optionally, the preceding signaling indication information is further used for indicating the type and/or transmission mode of the first sensing signal, that is, the signaling of n bits included in the DCI for PDSCH/PUSCH scheduling may further indicate the type and/or transmission mode of the first sensing signal. In this manner, the target node can receive the first sensing signal in the corresponding manner, thereby improving the success rate of receiving the sensing signal.

Optionally, the type of the first sensing signal may include at least one of the following: a continuous linear-frequency-modulated signal, a pulse signal, a Golay complementary sequence, a complete complementary sequence, a pseudo-noise (PN) sequence, or a Zadoff-Chu (ZC) sequence. Optionally, the transmission mode of the first sensing signal includes at least one of the following: single transmission, multiple transmissions of the complementary sequence, transmission at a transmission frequency greater than a preset frequency value, or transmission at a transmission frequency less than the preset frequency value. The preset frequency value may be 6 GHz.

FIG. 8 is a diagram illustrating the structure of a sensing signal transmission apparatus according to an embodiment of the present application. As shown in FIG. 8, the apparatus may include a sending module 801, an acquisition module 802, and a determination module 803.

Specifically, the sending module 801 is configured to send a sensing signal.

The acquisition module 802 is configured to acquire feedback information for the sensing signal.

The determination module 803 is configured to determine an environmental parameter of a to-be-measured region according to the feedback information.

The to-be-measured region is a region between a sensing signal transmitting node and a sensing signal receiving node.

Based on the preceding embodiments, optionally, the sending module 801 is specifically configured to send the sensing signal or a designated reference signal to a target node in the to-be-measured region at the first power during a first time period.

The acquisition module 802 is specifically configured to receive the RSRP of the sensing signal or the designated reference signal measured by the target node.

Alternatively, the sending module 801 is specifically configured to instruct a target node in the to-be-measured region to send the sensing signal or a designated reference signal at the second power during a first time period.

The acquisition module 802 is specifically configured to receive the sensing signal or the designated reference signal from the target node and measure the RSRP of the sensing signal or the designated reference signal.

Alternatively, the sending module 801 is specifically configured to instruct one target node of two target nodes among multiple target nodes in the to-be-measured region to send the sensing signal or a designated reference signal to the other target node of the pair at the third power during a first time period.

The acquisition module 802 is specifically configured to receive the RSRP of the sensing signal or the designated reference signal measured by the target node.

Correspondingly, the determination module 803 is specifically configured to determine the environmental parameter of the to-be-measured region during the first time period according to the transmit power of the sensing signal or the designated reference signal and the RSRP of the sensing signal or the designated reference signal.

Based on the preceding embodiments, optionally, the sending module 801 is specifically configured to send the sensing signal during a second time period.

The acquisition module 802 is specifically configured to receive a first echo signal resulting from the sensing signal being reflected by a sensing target.

Specifically, the sending module 801 is further configured to send the sensing signal during a first time period.

Specifically, the acquisition module 802 is further configured to receive a second echo signal resulting from the sensing signal being reflected by the sensing target.

Correspondingly, the determination module 803 is specifically configured to determine the environmental parameter of the to-be-measured region during the first time period according to the first echo signal and the second echo signal.

Based on the preceding embodiments, optionally, the apparatus further includes a processing module.

Specifically, the processing module is configured to measure the signal strength of the first echo signal.

The processing module is further configured to measure the signal strength of the second echo signal.

Correspondingly, the determination module 803 is further configured to determine the environmental parameter of the to-be-measured region during the first time period according to the signal strength of the first echo signal and the signal strength of the second echo signal.

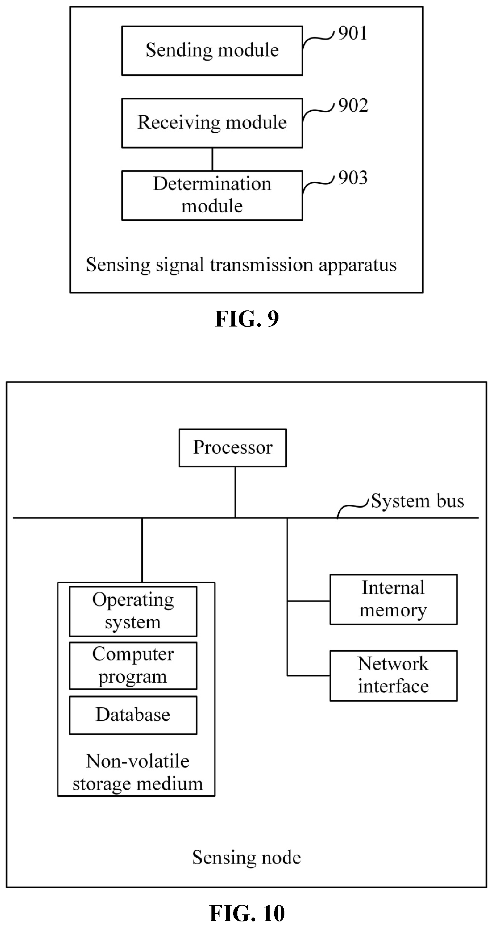

FIG. 9 is another diagram illustrating the structure of a sensing signal transmission apparatus according to an embodiment of the present application. As shown in FIG. 9, the apparatus may include a sending module 901, a receiving module 902, and a determination module 903.

Specifically, the sending module 901 is configured to send a first sensing signal.

The receiving module 902 is configured to receive first frequency information and first delay information of the first sensing signal measured by a target node.

The receiving module 902 is further configured to receive a second sensing signal from the target node.

The determination module 903 is configured to measure second frequency information and second delay information of the second sensing signal, determine a local oscillator frequency offset between a sensing node of the first sensing signal and the target node according to the first frequency information and the second frequency information, and determine a timing offset between the sensing node and the target node according to the first delay information and the second delay information.

Optionally, the first sensing signal after power normalization is the same as the second sensing signal after power normalization.

Based on the preceding embodiments, optionally, the sending module 901 is further configured to send signaling indication information, where the signaling indication information is used for instructing the target node to receive the first sensing signal and send the second sensing signal.

Based on the preceding embodiments, optionally, the sending module 901 is specifically configured to send the signaling indication information through DCI for PDSCH scheduling; or the sending module 901 is specifically configured to send the signaling indication information through DCI for PUSCH scheduling.

Based on the preceding embodiments, optionally, the sending module 901 is specifically configured to instruct, by signaling of n bits included in the DCI for the PDSCH scheduling, the target node to receive the first sensing signal in a downlink slot or symbol indicated by the DCI and to send the second sensing signal in the m-th uplink slot or symbol after the first sensing signal is sent, where n and m are natural numbers greater than 0.

Based on the preceding embodiments, optionally, the sending module 901 is specifically configured to instruct, by signaling of n bits included in the DCI for the PUSCH scheduling, the target node to receive the first sensing signal in the last downlink slot or symbol after the DCI is received and before the second sensing signal is sent and to send the second sensing signal in a transmission slot or symbol indicated by the DCI, where n is a natural number greater than 0.

Based on the preceding embodiments, optionally, the signaling indication information is further used for indicating a type and/or transmission mode of the first sensing signal.

Based on the preceding embodiments, optionally, the type of the first sensing signal includes at least one of the following: a continuous linear-frequency-modulated signal, a pulse signal, a Golay complementary sequence, a complete complementary sequence, a PN sequence, or a ZC sequence.

Based on the preceding embodiments, optionally, the transmission mode of the first sensing signal includes at least one of the following: single transmission, multiple transmissions of the complementary sequence, transmission at a transmission frequency greater than a preset frequency value, or transmission at a transmission frequency less than the preset frequency value.

Based on the preceding embodiments, optionally, the second sensing signal is sent based on the maximum transmit power.

In an embodiment, a sensing node is further provided, and the internal structural diagram of the sensing node may be shown in FIG. 10. The sensing node includes a processor, a memory, a network interface, and a database connected via a system bus. The processor of the sensing node is used for providing computing and control capabilities. The memory of the sensing node includes a non-volatile storage medium and an internal memory. The non-volatile storage medium stores an operating system, a computer program, and a database. The internal memory provides an environment for the operation of the operating system and the computer program in the non-volatile storage medium. The database of the sensing node is used for storing data generated during sensing signal transmission. The network interface of the sensing node is used for communicating with the external terminal and node via a network connection. When executed by the processor, the computer program causes the processor to perform a sensing signal transmission method.

It is to be understood by those skilled in the art that the structure shown in FIG. 10 is a block diagram of some structures related to the solution of the present application and does not limit the sensing node to which the solution of the present application is applied. The specific sensing node may include more or fewer components than the components shown in the figure, may include a combination of some of the components shown in the figure, or may have a different arrangement of the components shown in the figure.

The embodiment of the present application further provides a computer-readable storage medium storing a computer program which, when executed by a processor, causes the processor to perform the following.

A sensing signal is sent and feedback information for the sensing signal is acquired.

An environmental parameter of a to-be-measured region is determined according to the feedback information.

The to-be-measured region is a region between a sensing signal transmitting node and a sensing signal receiving node.

The embodiment of the present application further provides a computer-readable storage medium storing a computer program which, when executed by a processor, causes the processor to perform the following.

A first sensing signal is sent.

First frequency information and first delay information of the first sensing signal measured by a target node are received.

A second sensing signal is received from the target node and second frequency information and second delay information of the second sensing signal are measured.

A local oscillator frequency offset between a sensing node of the first sensing signal and the target node is determined according to the first frequency information and the second frequency information and a timing offset between the sensing node and the target node is determined according to the first delay information and the second delay information.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EEPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by using any appropriate medium including, but not limited to, a wireless medium, a wire, an optical cable, a radio frequency (RF), or any appropriate combination thereof.

Computer program codes for performing operations of the present disclosure may be written in one programming language or a combination of multiple programming languages. The programming languages include object-oriented programming languages (such as Java, Smalltalk, C++, Ruby, and Go) and conventional procedural programming languages (such as "C" and similar programming languages). Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1.  A sensing signal transmission method, comprising:

    sending a sensing signal and acquiring feedback information for the sensing signal; and determining an environmental parameter of a to-be-measured region according to the feedback information;
    wherein the to-be-measured region is a region between a sensing signal transmitting node and a sensing signal receiving node.

2.  The method of claim 1, wherein sending the sensing signal and acquiring the feedback information for the sensing signal comprises:

    sending the sensing signal or a designated reference signal to a target node in the to-be-measured region at first power during a first time period and receiving reference signal receiving power, RSRP, of the sensing signal or the designated reference signal measured by the target node; or

instructing a target node in the to-be-measured region to send the sensing signal or a designated reference signal at second power during a first time period, receiving the sensing signal or the designated reference signal from the target node, and measuring RSRP of the sensing signal or the designated reference signal; or

instructing a target node in a plurality of target nodes in the to-be-measured region to send the sensing signal or a designated reference signal to another target node in the plurality of target nodes at third power during a first time period, and receiving RSRP of the sensing signal or the designated reference signal measured by the other target node;

wherein determining the environmental parameter of the to-be-measured region according to the feedback information comprises:

determining the environmental parameter of the to-be-measured region during the first time period according to transmit power of the sensing signal or the designated reference signal and the RSRP of the sensing signal or the designated reference signal.

3. The method of claim 1, wherein sending the sensing signal and acquiring the feedback information for the sensing signal comprises:

during a second time period, sending the sensing signal and receiving a first echo signal resulting from the sensing signal being reflected by a sensing target; and

during a first time period, sending the sensing signal and receiving a second echo signal resulting from the sensing signal being reflected by the sensing target;

wherein determining the environmental parameter of the to-be-measured region according to the feedback information comprises:

determining the environmental parameter of the to-be-measured region during the first time period according to the first echo signal and the second echo signal.

4. The method of claim 3, further comprising:

measuring signal strength of the first echo signal; and

measuring signal strength of the second echo signal;

wherein determining the environmental parameter of the to-be-measured region during the first time period according to the first echo signal and the second echo signal comprises:

determining the environmental parameter of the to-be-measured region during the first time period according to the signal strength of the first echo signal and the signal strength of the second echo signal.

5. A sensing signal transmission method, comprising:

sending a first sensing signal;

receiving first frequency information and first delay information of the first sensing signal measured by a target node;

receiving a second sensing signal from the target node and measuring second frequency information and second delay information of the second sensing signal; and

determining a local oscillator frequency offset between a transmitting node of the first sensing signal and the target node according to the first frequency information and the second frequency information and determining a timing offset between the transmitting node of the first sensing signal and the target node according to the first delay information and the second delay information.

6. The method of claim 5, wherein the first sensing signal after power normalization is the same as the second sensing signal after power normalization.

7. The method of claim 5, further comprising:

sending signaling indication information, wherein the signaling indication information is used for instructing the target node to receive the first sensing signal and send the second sensing signal.

8. The method of claim 7, wherein sending the signaling indication information comprises:

sending the signaling indication information through Downlink Control Information, DCI, for Physical Downlink Shared Channel, PDSCH, scheduling; or

sending the signaling indication information through DCI for Physical Uplink Shared Channel, PUSCH, scheduling.

9. The method of claim 8, wherein sending the signaling indication information through the DCI for the PDSCH scheduling comprises:

instructing, by signaling of n bits in the DCI for the PDSCH scheduling, the target node to receive the first sensing signal in a downlink slot or symbol indicated by the DCI and to send the second sensing signal in an m-th uplink slot or symbol after the first sensing signal is sent, wherein n and m are natural numbers greater than 0.

10. The method of claim 8, wherein sending the signal-

21 **EP 4 757 357 A1** 22

ing indication information through the DCI for the PUSCH scheduling comprises:

instructing, by signaling of n bits in the DCI for the PUSCH scheduling, the target node to receive the first sensing signal in a last downlink slot or symbol after the DCI is received and before the second sensing signal is sent and to send the second sensing signal in a transmission slot or symbol indicated by the DCI, wherein n is a natural number greater than 0.

11. The method of claim 7, wherein the signaling indication information is further used for indicating at least one of a type of the first sensing signal or a transmission mode of the first sensing signal.

12. The method of claim 11, wherein the type of the first sensing signal comprises at least one of the following: a continuous linear-frequency-modulated signal, a pulse signal, a Golay complementary sequence, a complete complementary sequence, a pseudo-noise, PN, sequence, or a Zadoff-Chu, ZC, sequence.

13. The method of claim 11, wherein the transmission mode of the first sensing signal comprises at least one of the following: single transmission, a plurality of transmissions of a complementary sequence, transmission at a transmission frequency greater than a preset frequency value, or transmission at a transmission frequency less than the preset frequency value.

14. The method of claim 5, wherein the second sensing signal is sent based on maximum transmit power.

15. A sensing signal transmission apparatus, comprising:

a sending module, which is configured to send a sensing signal;
an acquisition module, which is configured to acquire feedback information for the sensing signal; and
a determination module, which is configured to determine an environmental parameter of a to-be-measured region according to the feedback information;
wherein the to-be-measured region is a region between a sensing signal transmitting node and a sensing signal receiving node.

16. A sensing signal transmission apparatus, comprising:

a sending module, which is configured to send a first sensing signal;
a receiving module, which is configured to receive first frequency information and first delay information of the first sensing signal measured by a target node and is further configured to receive a second sensing signal from the target node; and
a determination module, which is configured to measure second frequency information and second delay information of the second sensing signal, determine a local oscillator frequency offset between a transmitting node of the first sensing signal and the target node according to the first frequency information and the second frequency information, and determine a timing offset between the transmitting node of the first sensing signal and the target node according to the first delay information and the second delay information.

17. A sensing node, comprising a memory and a processor, wherein the memory is configured to store a computer program which, when executed by the processor, causes the processor to perform the method of any one of claims 1 to 14.

18. A storage medium configured to store a computer program which, when executed by a processor, causes the processor to perform the method of any one of claims 1 to 14.

12

| Send a sensing signal and acquire feedback information for the sensing signal | S101 |

| Determine an environmental parameter of a to-be-measured region according to the feedback information | S102 |

**FIG. 1**

| Send the sensing signal or a designated reference signal to a target node in the to-be-measured region at the first power during a first time period | S201 |

| Receive the RSRP of the sensing signal or the designated reference signal measured by the target node | S202 |

| Determine the environmental parameter of the to-be-measured region during the first time period according to the transmit power of the sensing signal or the designated reference signal and the RSRP of the sensing signal or the designated reference signal | S203 |

**FIG. 2**

Instruct a target node in the to-be-measured region to send the sensing signal or a designated reference signal at the second power during a first time period — S301

Receive the sensing signal or the designated reference signal sent by the target node and measure the RSRP of the sensing signal or the designated reference signal — S302

Determine the environmental parameter of the to-be-measured region during the first time period according to the transmit power of the sensing signal or the designated reference signal and the RSRP of the sensing signal or the designated reference signal — S303

**FIG. 3**

Instruct one of two target nodes among multiple target nodes in the to-be-measured region to send the sensing signal or the designated reference signal to the other one of the two target nodes at the third power during the first time period — S401

Receive the RSRP of the sensing signal or the designated reference signal measured by the other target node — S402

Determine the environmental parameter of the to-be-measured region during the first time period according to the transmit power of the sensing signal or the designated reference signal and the RSRP of the sensing signal or the designated reference signal — S403

**FIG. 4**

During a second time period, send the sensing signal and receive a first echo signal resulting from the sensing signal being reflected by a sensing target ~S501

During a first time period, send the sensing signal and receive a second echo signal resulting from the sensing signal being reflected by the sensing target ~S502

Determine the environmental parameter of the to-be-measured region during the first time period according to the first echo signal and the second echo signal ~S503

**FIG. 5**

Send a first sensing signal ~S601

Receive the first frequency information and the first delay information of the first sensing signal measured by a target node ~S602

Receive a second sensing signal sent by the target node and measure the second frequency information and the second delay information of the second sensing signal ~S603

Determine a local oscillator frequency offset with the target node according to the first frequency information and the second frequency information and determine a timing offset with the target node according to the first delay information and the second delay information ~S604

**FIG. 6**

**FIG. 7**

**FIG. 8**

**FIG. 9**

**FIG. 10**

## INTERNATIONAL SEARCH REPORT

| International application No. |
| --- |
| **PCT/CN2024/093561** |

| A. | CLASSIFICATION OF SUBJECT MATTER |
| --- | --- |

H04W4/38(2018.01)i; H04W24/08(2009.01)i; H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, ENTXTC, CJFD, DWPI, 3GPP: 感知, 信号, 反馈, 测量, 区域, 环境, 参数, sensing, signal, feedback, measurements, region, environment, parameter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115696419 A (VIVO MOBILE COMMUNICATION CO., LTD.) 03 February 2023 (2023-02-03) <br> description, paragraphs 42-703 | 1-4, 15, 17-18 |
| X | CN 115696369 A (VIVO MOBILE COMMUNICATION CO., LTD.) 03 February 2023 (2023-02-03) <br> claims 1-23, and description, paragraphs 9-26 | 1-4, 15, 17-18 |
| X | CN 115696420 A (VIVO MOBILE COMMUNICATION CO., LTD.) 03 February 2023 (2023-02-03) <br> claims 1-67, and description, paragraphs 3-29 | 1-4, 15, 17-18 |
| X | CN 115696365 A (VIVO MOBILE COMMUNICATION CO., LTD.) 03 February 2023 (2023-02-03) <br> claims 1-56, and description, paragraphs 4-33 | 1-4, 15, 17-18 |
| X | CN 115696370 A (VIVO MOBILE COMMUNICATION CO., LTD.) 03 February 2023 (2023-02-03) <br> claims 1-38, and description, paragraphs 10-41 | 1-4, 15, 17-18 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 July 2024** | **07 August 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/093561**

**C.    DOCUMENTS CONSIDERED TO BE RELEVANT**

| Category* | Citation of document, with indication, where appropriate, of the relevant passages | Relevant to claim No. |
|---|---|---|
| X | CN 115696371 A (VIVO MOBILE COMMUNICATION CO., LTD.) 03 February 2023 (2023-02-03) claims 1-30, and description, paragraphs 9-40 | 1-4, 15, 17-18 |
| A | US 2020329340 A1 (T MOBILE USA INC.) 15 October 2020 (2020-10-15) entire document | 1-4, 15, 17-18 |

Form PCT/ISA/210 (second sheet) (July 2022)

## INTERNATIONAL SEARCH REPORT

International application No.

**PCT/CN2024/093561**

| Box No. III | Observations where unity of invention is lacking (Continuation of item 3 of first sheet) |
| --- | --- |

This International Searching Authority found multiple inventions in this international application, as follows:

Invention 1: claims 1-4, 15, 17 (when referring to any one of claims 1-4) and 18 (when referring to any one of claims 1-4); and invention 2: claims 5-14, 16, 17 (when referring to any one of claims 5-14) and 18 (when referring to any one of claims 5-14). Invention 1 and invention 2 do not belong to a single general inventive concept, wherein in invention 1, an environmental parameter of a region to be subjected to measurement is determined by sending a sensing signal and acquiring feedback information for the sensing signal, and in invention 2, a local oscillation frequency deviation and a timing deviation between a sending node of a first sensing signal and a target node are determined by "sending the first sensing signal; receiving first frequency information and first delay information of the first sensing signal that are measured by the target node; and receiving a second sensing signal sent by the target node, and measuring second frequency information and second delay information of the second sensing signal". It can be seen that the technical problems to be solved by invention 1 and invention 2 are different, and obtained technical effects are different. Therefore, the inventions do not belong to a single general inventive concept, and do not comply with PCT Rule 13.1. The mere same or corresponding features "sending a sensing signal, and receiving or acquiring information related to the sensing signal" between invention 1 and invention 2 are customary means for a person skilled in the art. Invention 1 and invention 2 do not share a same or corresponding special technical feature, and therefore do not comply with PCT Rule 13.2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-4, 15, 17 (when referring to any one of claims 1-4), 18 (when referring to any one of claims 1-4)**

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

| International application No. |
| --- |
| **PCT/CN2024/093561** |

| Patent document cited in search report | | | Publication date (day/month/year) | Patent family member(s) | | | Publication date (day/month/year) |
| --- | --- | --- | --- | --- | --- | --- | --- |
| CN | 115696419 | A | 03 February 2023 | WO | 2023001183 | A1 | 26 January 2023 |
| CN | 115696369 | A | 03 February 2023 | WO | 2023001269 | A1 | 26 January 2023 |
| CN | 115696420 | A | 03 February 2023 | WO | 2023001179 | A1 | 26 January 2023 |
| | | | | EP | 4375694 | A1 | 29 May 2024 |
| | | | | US | 2024196258 | A1 | 13 June 2024 |
| CN | 115696365 | A | 03 February 2023 | WO | 2023001184 | A1 | 26 January 2023 |
| | | | | US | 2024196255 | A1 | 13 June 2024 |
| | | | | EP | 4376469 | A1 | 29 May 2024 |
| CN | 115696370 | A | 03 February 2023 | WO | 2023001243 | A1 | 26 January 2023 |
| | | | | US | 2024155394 | A1 | 09 May 2024 |
| CN | 115696371 | A | 03 February 2023 | WO | 2023001270 | A1 | 26 January 2023 |
| | | | | US | 2024155388 | A1 | 09 May 2024 |
| US | 2020329340 | A1 | 15 October 2020 | None | | | |

Form PCT/ISA/210 (patent family annex) (July 2022)